# EUROPÄISCHE PATENTSCHRIFT

(11) **EP 0 632 770 B1**
(45) Veröffentlichungstag und Bekanntmachung des Hinweises auf die Patenterteilung: **22.05.1996**
(21) Anmeldenummer: 93904001.0
(22) Anmeldetag: 22.02.1993
(51) Int. Cl.: B60T 8/36, F16K 31/06

(54) **ELEKTROMAGNETVENTIL, INSBESONDERE FÜR HYDRAULISCHE BREMSANLAGEN MIT SCHLUPFREGELUNG**
ELECTROMAGNETIC VALVE, ESPECIALLY FOR HYDRAULIC BRAKE SYSTEMS WITH SLIP CONTROL
SOUPAPE ELECTROMAGNETIQUE, NOTAMMENT POUR SYSTEMES DE FREINAGE HYDRAULIQUES AVEC ANTIPATINAGE

(30) Priorität: 04.04.1992 DE 4211307
(43) Veröffentlichungstag der Anmeldung: 11.01.1995
(73) Patentinhaber: ALFRED TEVES GmbH, D-60441 Frankfurt (DE)
(72) Erfinder: REINARTZ, Hans-Dieter, D-6000 Frankfurt/Main 50 (DE); BECK, Erhard, D-6290 Weilburg (DE); DINKEL, Dieter, D-6239 Eppstein (DE)
(86) Internationale Anmeldenummer: EP9300410
(87) Internationale Veröffentlichungsnummer: WO9319961

(56) Entgegenhaltungen:
- EP-A- 0 238 387
- EP-A- 0 265 885
- EP-A- 0 423 755
- WO-A-91/18774
- DE-A- 3 833 475
- DE-A- 4 030 971
- FR-A- 2 640 215
- GB-A- 2 219 055
- GB-A- 2 252 374
- US-A- 4 638 974

## Beschreibung

Die Erfindung betrifft ein Elektromagnetventil, insbesondere für hydraulische Bremsanlagen mit Schlupfregelung, nach dem Oberbegriff des Anspruchs 1.

Aus der nach dem Anmeldetag der internationalen Anmeldung veröffentlichten deutschen Patentanmeldung DE-A-41 41 546 geht ein Elektromagnetventil hervor, das zur Steuerung des Druckmittelstromes mit einem fest im Ventilstützkörper verstemmten Ventilsitzkörper versehen ist, der gleichzeitig eine Blendenbohrung aufweist. Der Ventilsitzkörper muß vor der Montage aller notwendigen Ventilteile in den Bohrungsabschnitt des Ventilstützkörpers eingefügt werden, so daß ein an den Toleranzen der Ventileinzelteile orientierte Einjustierung des Ventilsitzkörpers nachträglich nicht mehr vollzogen werden kann. Der Ventilsitzkörper ist in seiner Lage an die Form der Bohrungsstufe angepaßt und verstemmt gehalten. Überdies hat das in dieser Patentanmeldung beschriebene Elektromagnetventil den Nachteil, daß infolge des nur begrenzt zur Verfügung stehenden Bauvolumens die Integration eines insbesondere für hydraulische Bremsanlagen mit Schlupfregelung erforderliche Rückschlagventil im Ventilstützkörper nicht vorgesehen ist. Da die Blendenbohrung mit dem Ventilsitzkörper eine im Ventilstützkörper verstemmte Einheit bildet, läßt sich eine. individuelle Anpassung der jeweils für die angeschlossene Anlage erforderlichen Blendenfunktion nicht durchführen.

Aus der EP-A-0265885 ist bereits ein Elektromagnetventil bekannt worden, daß in seinem Ventilaufnahmekörper ein Ventilschließglied mit einem Magnetanker aufweist, der bei elektromagnetischer Erregung einer Spule mit dem Ventilschließglied in Richtung des Ventilsitzkörpers bewegbar ist. Der Ventilsitzkörper übernimmt eine Rückschlagventilfunktion, wozu in Abhängigkeit von einer Druckdifferenz vor und hinter dem Ventilsitzkörper sich dieser entgegen der Wirkung einer Druckfeder vom Ventilschließglied entfernen kann. Der Magnetanker ist mit dem Ventilschließglied innerhalb einer Ventilhülse geführt, die zwischen dem Ventilgehäuse und dem Magnetkern eingespannt ist. Der Ventilsitzkörper kann sich innerhalb einer Bohrung im Magnetkern axial bewegen. An dieser Bohrung schließt sich ein axial in dem Magnetkern einmündender Druckmittelkanal an. In Nähe des Magnetankers münden weitere Druckmittelkanäle axial in den Ventilaufnahmekörper ein, so daß in der elektromagnetisch nicht erregten Stellung die zu beiden Seiten des Elektromagnetventils einmündenden Druckmittelkanäle über eine Blendenbohrung im Ventilsitzkörper permanent miteinander verbunden sind. In der elektromagnetisch erregten Ventilschließstellung sind die Druckmittelkanäle so lange getrennt, bis infolge einer hydraulischen Druckdifferenz am Ventilsitzkörper dieser vom Ventilschließglied abhebt. Das Elektromagnetventil hat jedoch den Nachteil, daß die Einstellung des Druckaufbau- und abbaugradienten von der Fertigungsgenauigkeit der Blendenbohrung im Ventilsitzkörper abhängt, so daß im Bedarfsfalle der Ventilsitzkörper ausgetauscht oder nachgearbeitet werden muß. Etwaige Beschädigungen der Gleitfläche und ein unbrauchbar werden des Ventilsitzkörpers ist nicht auszuschließen. Ein weiterer Nachteil ergibt sich durch die fehlenden Filtermaßnahmen, um etwaige Schmutzpartikel des Fluides nicht zu einem Verstopfen der Blendenbohrung führen zu lassen.

Daher ist es die Aufgabe der Erfindung, ein einfach herzustellendes Elektromagnetventil zu schaffen, das ein allseitiges Eindringen von Schmutz zum Ventilsitz und zum Blendenkörper verhindert und das bei Bedarf eine gut lösbare, einfache Verbindung des Blendenkörpers mit dem Ventilsitzkörper ermöglicht, ohne hierzu eine erhebliche bauliche Veränderung des Elektromagnetventils vornehmen zu müssen.

Diese Aufgabe wird erfindungsgemäß durch die den Patentanspruch 1 kennzeichnenden Merkmale gelöst.

Durch die in den Unteransprüchen aufgezeigten Maßnahmen sind zweckmäßige Ausbildungen der Erfindung angegeben, die im Zusammenhang mit den weiteren Merkmalen und Vorteilen der Erfindung nachfolgend anhand mehrerer Zeichnungen näher dargestellt und erläutert werden.

Es zeigen:
- Figur 1: einen Querschnitt durch ein in der Grundstellung geöffnetes Elektromagnetventil,
- Figur 2: eine alternative Ausführungsform des Ventilsitzkörpers in einem abschnittsweise gezeigten Elektromagnetventil.

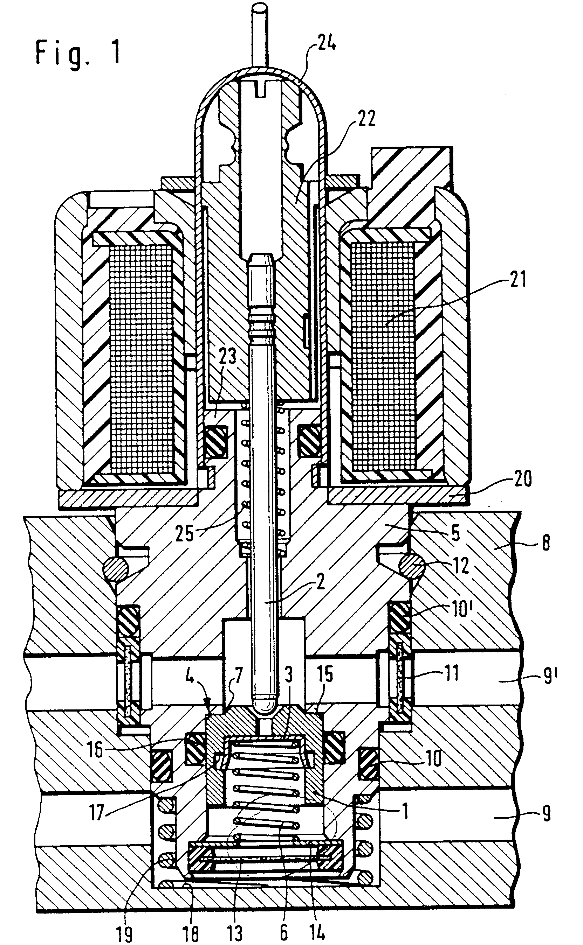

Es zeigt die Figur 1 einen Querschnitt durch ein in der Grundstellung geöffnetes Elektromagnetventil. Das Elektromagnetventil befindet sich in einem nicht näher spezifizierten blockförmigen Ventilaufnahmekörper 8, der vorzugsweise aus Aluminium hergestellt ist. Im einzelnen nimmt die nachfolgende Beschreibung Bezug auf die erfindungsrelevanten Bauteile des Elektromagnetventils. Das Elektromagnetventil besteht aus dem in die gestufte Gehäusebohrung des Ventilaufnahmekörpers 8 eingesetzten Ventilstützkörpers 5, der zur Abdichtung der in der Gehäusebohrung eingelassenen Druckmittelkanälen 9, 9' am Umfang mit Dichtungen 10, 10' versehen ist. Der Ventilstützkörper 5 ist mit seinen Maßen an die gestufte Gehäusebohrung derart angepaßt, daß am Umfang des Ventilstützkörpers 5 - in der Zeichnung auf Höhe des Ventilschließgliedes - eine Ausnehmung vorgesehen ist, so daß ein einen Ringfilter aufnehmender Gehäuseringraum verbleibt, der über den als Querbohrung ausgeführten Druckmittelkanal 9' die Druckmittelverbindung zwischen dem in der Zeichnung unterhalb der Ventilnadel 2 gelegenen Druckmittelkanal 9 mit dem zuvor genannten Druckmittelkanai 9' herstellt. Der Gehäuseringraum nimmt außer dem Ringfilterelement 11 darüber angeordnet die den Ventilstützkörper 5 gegenüber dem Ventilaufnahmekörper 8 abdichtende Dichtung 10' auf. Oberhalb dieser Dichtung 10 ' ist im Umfang des Ventilstützkörpers eine mit einer Schräge versehene Ringnut zur Aufnahme eines Sprengringes 12 angebracht, der in eine Nut des Ventilaufnahmekörpers 8 einschnappt. Ebenso weist der in der Zeichnung unterhalb des Ventilsitzes einmündende Druckmittelkanal 9 ein Plattenfilterelement 13 auf, so daß ein allseitiges Eindringen von Schmutz zur Durchlaßöffnung im Ventilsitz und damit in den Blendenkörper 3 vermieden ist. An einer dem Plattenfilterelement 13 vorangefügten Anschlagscheibe 14 stützt sich eine Druckfeder 6 ab, die den mit dem Blendenkörper 3 versehenen Ventilsitzkörper 1 an einem Gehäuseanschlag 15 hält. Der Ventilsitzkörper 1 ist innerhalb eines zur Ventilnadel 2 koaxial ausgerichteten Bohrungsabschnittes axial beweglich geführt, sowie durch eine in einer Innenringnut des Ventilstützkörpers 5 eingefügte Dichtung 16 am Umfang abgedichtet. Der vorzugsweise aus einem Dünnpreßteil hergestellte kappenförmige Blendenkörper 3 greift infolge seiner aufspreizenden Wirkung, ähnlich der Wirkung eines Clips in eine Innenringnut 17 des im wesentlichen hohlzylinderförmig gestalteten Ventilsitzkörpers 5 ein. Die Tiefenmaße der Bohrungsstufe im Ventilaufnahmekörper 8 sind gegenüber der abgestuften Länge des Ventilstützkörpers 5 derart größer zu wählen, daß jederzeit ein ausreichendes axiales Montagespiel verbleibt. Ferner erweist sich zum Zwecke der Ventilmontage und um damit ein versehentliches zu tiefes Eindrücken des Ventils in den Ventilaufnahmekörper 8 zu verhindern, eine entsprechend steif dimensionierte, zwischen dem Bohrungsgrund 18 und dem Ventilstützkörper 5 abgestützte Druckfeder 19 für zweckmäßig. Diese relativ steife Druckfeder 19 sorgt dafür, daß unter allen Betriebszuständen der Ventilstützkörper 5 in Anlage am Sprengring 12 verbleibt. Der Ventilstützkörper 5 ist vorzugsweise aus ferromagnetischem Stahl hergestellt und besitzt zur Lenkung des Magnetflusses eine Stahlscheibe 20. Die Stahlscheibe 20 schließt den Magnetkreis zwischen der ihr zugeordneten Magnetspule 21 und dem Ventilstützkörper 5. Die Stahlscheibe 20 ist als loses Teil über den sich in Richtung des Magnetankers 22 erstreckenden Fortsatz 23 auf den Ventilstützkörper 5 zentriert. Am hohlzylindrischen Fortsatz 23 ist gleichzeitig die dem Magnetanker 22 umschließende Ventilhülse 24 befestigt. In der gezeigten Darstellung ist die Ventilhülse 24 mittels einer Lanzierung am Fortsatz 23 gehalten. Zur Abdichtung dieser Befestigungsstelle befindet sich zwischen dem Fortsatz 23 und der Ventilhülse 24 eine Dichtung. Andere Befestigungsarten, beispielsweise mittels Schweiß- und Klemmverbindung sind ebenso ohne das Erfordernis einer separaten Abdichtung denkbar.

### Funktionsweise:

Nachfolgend soll anhand den zuvor beschriebenen Einzelheiten des Elektromagnetventils nach Figur 1 die Wirkungsweise der erfindungswesentlichen Merkmale erläutert werden.

Die Figur 1 zeigt das Elektromagnetventil in der elektromagnetisch nicht betätigten offenen Schaltstellung. Die Ventilnadel 2 ist infolge der Wirkung der zwischen dem Ventilstützkörper 5 und dem Magnetanker 22 eingespannten Druckfeder 25 vom Ventilsitz abgehoben. Somit besteht eine offene Druckmittelverbindung zwischen den beiden Druckmittelkanälen 9, 9'. Bei elektromagnetischer Erregung des Ventils verschließt die Ventilnadel 2 den Druckmitteldurchgang durch den Ventilsitzkörper 1, solange die auf den Ventilsitzkörper 1 ausgeübte Kraft der zugehörigen Druckfeder 6 zumindest gleich oder größer ist als die elektromagnetische Stellkraft und die aus der Druckdifferenz in den beiden Druckmittelkanälen 9, 9' resultierende hydraulische Gegenkraft. Auf einen konkreten Anwendungsfall bezogen, beispielsweise für die Bremsdruckhaltephase innerhalb einer im Blockierschutzmodus befindlichen Bremsanlage, bedeutet dies, daß bei einer Druckabsenkung im abbildungsgemäßen unteren Druckmittelkanal 9, wie dies durch die Freigabe des Bremspedals geschieht, das im abbildungsgemäßen oberen zum Druckmittelverbraucher (Radbremse) führende Druckmittelkanal 9', eingeschlossene Druckmittel den Ventilsitzkörper 1 entgegen der Druckfeder 6 verschiebt. Folglich gelangt der Radbremsdruck über den sich von der Ventilnadel 2 entfernenden Ventilsitz und über die Blendenöffnung in den abbildungsgemäßen unteren Druckmittelkanal 9. Damit ist auf baulich einfache Weise eine Rückschlagventilfunktion zwischen dem Druckmittelkanal 9' (Druckmittelverbraucher) und dem weiteren Druckmittelkanal 9 (Druckmittelversorger) integriert.

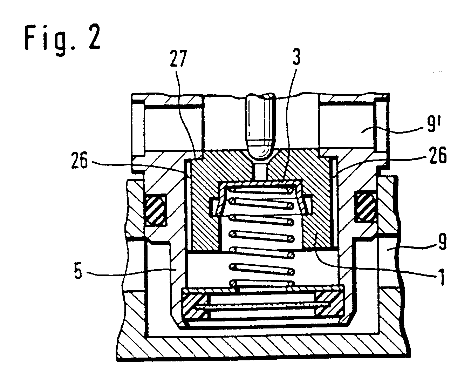

Die Figur 2 zeigt eine alternative Ausführungsform zur Gestaltung des mit einer Rückschlagventilfunktion versehenen Ventilsitzkörpers 1. Dieser Ventilsitzkörper 1 unterscheidet sich von Figur 1 durch die Anordnung von Längsnuten 26 am Umfang des Ventilsitzkörpers. Damit übernimmt zugleich der normalerweise am Ventilstützkörper 5 anliegende Ringbereich des Ventilsitzkörpers 1 die Funktion einer Dichtsitzfläche 27, die nach dem Abheben vom Ventilstützkörper 5 das Druckmittel vom Druckmittelkanal 9' (verbraucherseitige Radbremse) über die Längsnuten 26 mit relativ geringem Strömungswiderstand in Richtung des am Druckmittelkanal 9 angeschlossenen Druckmittelversorgers (Hauptbremszylinder) entweichen läßt.

### Bezugszeichenliste

- 1: Ventilsitzkörper
- 2: Ventilnadel
- 3: Blendenkörper
- 4: Rückschlagventil
- 5: Ventilstützkörper
- 6: Druckfeder
- 7: Bohrungsstufe
- 8: Ventilaufnahmekörper
- 9, 9': Druckmittelkanal
- 10, 10': Dichtung
- 11: Ringfilterelement
- 12: Sprengring
- 13: Plattenfilterelement
- 14: Anschlagscheibe
- 15: Gehäuseanschlag
- 16: Dichtung
- 17: Ringnut
- 18: Bohrungsgrund
- 19: Druckfeder
- 20: Stahlscheibe
- 21: Magnetspule
- 22: Magnetanker
- 23: Fortsatz
- 24: Ventilhülse
- 25: Druckfeder
- 26: Längsnut
- 27: Dichtsitzfläche

## Patentansprüche

1. Elektromagnetventil, insbesondere für hydraulische Bremsanlagen mit Schlupfregelung, in dem in einer Gehäusebohrung eines Ventilaufnahmekörpers (8) ein eine Ventilhülse (24) aufnehmender Ventilstützkörper (5) befestigt ist, wobei ein von der Ventilhülse (24) umschlossener Magnetanker (22) in Abhängigkeit einer strombeaufschlagbaren, an der Ventilhülse (24) angebrachten Magnetspule (21) eine Hubbewegung vollzieht, so daß eine am Magnetanker (22) angeformte mit einem Ventilschließglied versehene Ventilnadel (2) mittels eines im Ventilstützkörper (5) gehaltenen Ventilsitzkörpers (1) eine Druckmittelverbindung zwischen wenigstens einem ersten sowie einem weiteren Druckmittelkanal (9, 9')zu steuern vermag, sowie mit einer baulich zwischen den beiden Druckmittelkanälen (9, 9') im Ventilstützkörper (5) integrierten Rückschlagventilfunktion, wobei der an einem Gehäuseanschlag (15) des Ventilstützkörpers (5) gehaltene Ventilsitzkörper (1) bei einer Druckabsenkung zwischen dem ersten und zweiten Druckmittelkanal (9, 9') im Ventilstützkörper (5) koaxial gegenüber der Ventilnadel (2) verlagerbar ist, wobei der durch die elektromagnetische Erregung des Ventils von der Ventilnadel (2) im Ventilsitzkörper (1) verschlossene Druckmitteldurchgang freigegeben ist und beide Druckmittelkanäle (9, 9') miteinander verbunden sind, dadurch **gekennzeichnet,** daß der Ventilsitzkörper (1) als hohlzylinderförmig gestaltetes Teil eine Innenringnut (17) aufweist, in die ein aus einem Dünnpreßteil hergestellter, kappenförmiger, aufspreizbarer Blendenkörper (3) eingreift, daß am Umfang des Ventilstützkörpers (5) auf Höhe des Ventilschließgliedes eine Ausnehmung vorgesehen ist, die mit dem Ventilaufnahmekörper (8) einen Gehäuseringraum bildet, der einen Ringfilter (11) aufnimmt, daß an der vom Ventilschließglied abgewandten Seite des Ventilsitzkörpers (1) ein Plattenfilterelement (13) am Ventilstützkörper (5) angeordnet ist, daß sich an einer dem Plattenfilterelement (13) vorangefügten Anschlagscheibe (14) eine Druckfeder (6) abstützt, die den mit dem Blendenkörper (3) versehenen Ventilsitzkörper (1) in der elektomagnetisch nicht betätigten offenen Schaltstellung des Ventils an den Gehäuseanschlag (15) hält, und daß der Ventilstützkörper (5) druckmitteldicht in der Gehäusebohrung des Ventilaufnahmekörpers (8) befestigt ist.

2. Elektromagnetventil nach Anspruch 1, dadurch **gekennzeichnet,** daß die erweiterte Öffnung der Kappe des Ventilsitzkörpers (1) und des Blendenkörpers (3) auf der der Ventilnadel (2) abgewandten Stirnseite gelegen ist.

3. Elektromagnetventil nach Anspruch 1, dadurch **gekennzeichnet,** daß der Ventilsitzkörper (1) mit seiner Stirnfläche unter Wirkung der Druckfeder (6) an einer Bohrungsstufe (7) des Ventilstützkörpers (5) abdichtend anlegbar ist.

## Claims

1. An electromagnetic valve, in particular, for hydraulic braking systems with slip control, wherein a valve support member (5) accommodating a valve sleeve (24) is fixed in a housing bore of a valve-accommodating member (8), with a hold-on magnet (22) enclosed by the valve sleeve (24) performing a stroke in response to an electrically energizable magnetic coil (21) provided on the valve sleeve (24) so that a valve needle (2) formed to the hold-on magnet (22) and having a valve closure member, by way of a valve seat member (1) retained within the valve support member (5), is able to control a pressure fluid connection between at least one first and one additional pressure fluid passageway (9, 9'), and including a check valve function integrated between the two pressure fluid passageways (9, 9') in the valve support member (5), and the valve seat member (1) retained on a housing stop (15) of the valve support member (5) being adapted to be shifted coaxially with respect to the valve needle (2) during pressure decrease between the first and the second pressure fluid passageway (9, 9') in the valve support member (5), and the pressure fluid passageway which is closed by the valve needle (2) in the valve seat member (1) is opened due to the electromagnetic energization of the valve, and both pressure fluid passageways (9, 9') are interconnected,
characterized in that the valve seat member (1), as a hollow cylindical part, includes an internal annular groove (17) in which a cap-shaped spreadable diaphragm member (3) is engaged which is made from a thin-press part, in that a recess is provided on the periphery of the valve support member (5) at the level of the valve closure member, which recess, along with the valve-accommodating member (8), forms an annular housing chamber accommodating an annular filter element (11), in that a plate filter element (13) is arranged on the valve support member (5) on the side of the valve seat member (1) remote from the valve closure member, in that a compression spring (6) is supported on a stop part (14) arranged in front of the plate filter element (13) and retains the valve seat member (1) having the diaphragm member (3) on the housing stop (15) in the electromagnetically non-actuated open position of the valve, and in that the valve support member (5) is fixed within the housing bore of the valve-accommodating member (8) in a pressure-fluid-tight manner.

2. An electromagnetic valve as claimed in claim 1,
characterized in that the enlarged opening of the cap of the valve seat member (1) and of the diaphragm member (3) is provided on the front side facing away from the valve needle (2).

3. An electromagnetic valve as claimed in claim 1,
characterized in that the valve seat member (1) with the front face thereof, under the effect of the compression spring (6), is movable into sealing abutment with a bore step (7) of the valve support member (5).

## Revendications

1. Valve à électro-aimant, notamment pour système hydraulique de freinage à régulation du glissement, dans laquelle un corps d'appui de valve (5), servant à recevoir un manchon de valve (24), est fixé dans un alésage de boîtier d'un corps de logement de valve (8), tandis qu'une armature d'aimant (22), qui entoure le manchon de valve (24), exécute un déplacement dans un sens et dans l'autre en fonction de l'action d'une bobine d'aimant (21) montée sur le manchon de valve (24) et agencée de façon à pouvoir être soumise à l'action d'un courant, d'une façon telle qu'un pointeau de valve (2), monté au formage sur l'armature d'aimant (22) et pourvu d'un obturateur de valve, permet de commander, au moyen d'un corps formant siège de valve (1) maintenu dans le corps d'appui de valve (5), une liaison offerte à l'agent de pression entre au moins un premier et un second conduits d'agent de pression (9, 9'), la valve à électro-aimant comportant aussi une fonction de valve antiretour intégrée structurellement dans le corps d'appui de valve (5) entre les deux conduits d'agent de pression (9, 9'), tandis que le corps formant siège de valve (1), qui est maintenu en appui sur une butée de boîtier (15) du corps d'appui de valve (5), est agencé de façon à pouvoir être déplacé dans le corps d'appui de valve (5), suivant le même axe et vers le pointeau de valve (2), lors d'une diminution de pression entre le premier et le second conduits d'agent de pression (9, 9'), de sorte que le passage d'agent de pression, qui est fermé dans le corps de siège de valve (1) par le pointeau de valve (2) sous l'effet de l'excitation de la valve par voie électromagnétique, est libéré et que les deux conduits d'agent de pression (9, 9') communiquent l'un avec l'autre, caractérisée en ce que le corps formant siège de valve (1), constitué d'une pièce réalisée en forme de cylindre creux, comporte une gorge annulaire intérieure (17) dans laquelle s'accroche un corps de diaphragme (3) en forme de cuvette qui est réalisé à partir d'une pièce emboutie mince et est agencé de façon à pouvoir se déployer, en ce qu'à la périphérie du corps d'appui de valve (5) et à hauteur de l'obturateur de valve, il est prévu une cavité qui forme, avec le corps de logement de valve (8), une chambre annulaire de boîtier qui sert à loger un filtre annulaire (11), en ce qu'un élément de filtre (13) en forme de plaquette est disposé sur le corps d'appui de valve (5) du côté du corps formant siège de valve (1) qui est situé à l'opposé à l'obturateur de valve, en ce qu'un ressort de compression (6) prend appui sur un disque de butée (14) inséré préalablement à l'élément de filtre (13) en forme de plaquette, ce ressort de compression (6) maintenant le corps formant siège de valve (1), pourvu du corps de diaphragme (3), en appui sur la butée de boîtier (15) dans la position de commutation ouverte de la valve, dans laquelle elle n'est pas actionnée par voie électromagnétique, et en ce que le corps d'appui de valve (5) est fixé, d'une manière étanche à l'agent de pression, dans l'alésage de boîtier du corps de logement de valve (8).

2. Valve à électro-aimant selon la revendication 1, caractérisée en ce que l'ouverture plus large de la cuvette du corps formant siège de valve (1) et du corps de diaphragme (3) est disposée du côté frontal situé à l'opposé du pointeau de valve (2).

3. Valve à électro-aimant selon la revendication 1, caractérisée en ce que le corps formant siège de valve (1) est agencé de façon à pouvoir être appliqué d'une manière étanche, par sa surface frontale et sous l'action du ressort de compression (6), sur un épaulement d'alésage (7) du corps d'appui de valve (5).
